# EUROPÄISCHE PATENTANMELDUNG

(11) **EP 3 657 736 A1**
(43) Veröffentlichungstag der Anmeldung: **27.05.2020**
(21) Anmeldenummer: 18207306.4
(22) Anmeldetag: 20.11.2018
(51) Int. Cl.: H04L 12/40, H04W 4/021

(54) **KABELGEBUNDENE UND KOMBINIERTE KOMMUNIKATIONSANBINDUNG UND ENERGIEVERSORGUNG VON SENSOREN IN GEBÄUDEN**

(71) Anmelder: InnoCow GmbH, 67663 Kaiserslautern (DE)
(72) Erfinder: Matthias Weins, 67663 Kaiserslautern (DE)
(74) Vertreter: dompatent von Kreisler Selting Werner - Partnerschaft von Patent- und Rechtsanwälten mbB

(57) **Zusammenfassung**

Die Vorrichtung zur Ortung der Tiere einer Viehherde im Bereich eines Stalls (10) ist versehen mit einer Busleitung (16), mehreren Empfangsantennen aufweisenden Busteilnehmern zur Anordnung in oder an einem Stall (10), wobei die mehreren Empfangsantennen dazu ausgelegt sind, Funksignale von Sendern zu empfangen, die von sich im Bereich des Stalls (10) befindenden Tieren mitführbar sind. Ferner ist die Vorrichtung versehen mit einer an die Busleitung (16) angeschlossenen Steuer- und Versorgungseinheit (14) zur uni- oder bidirektionalen Datenkommunikation mit den Busteilnehmern (12) und zur Versorgung der Busteilnehmer (12) mit elektrischer Energie. Die Busteilnehmer (12) sind an die Busleitung (16) angeschlossen und über die Busleitung (16) mit der Steuer- und Versorgungseinheit (14) sowohl für die Datenkommunikation als auch zur Energieversorgung verbunden.

## Beschreibung

Die Erfindung betrifft die kabelgebundene und kombinierte Kommunikationsanbindung und Energieversorgung von Sensoren in Gebäuden. Insbesondere betrifft die Erfindung eine Vorrichtung zur Ortung der Tiere einer Viehherde im Bereich eines Stalls.

### Stand der Technik

Benötigen in einem Stall zu verbauende Messgeräte oder Sensoren lediglich Strom, weil sie entweder autark funktionieren oder Daten per Funk austauschen, fällt lediglich die Verlegung eines Stromkabels pro Gerät im Stall an. Wenn die Geräte aber kabelgebunden Daten austauschen müssen, z. B. weil die Kommunikation zeitkritisch ist und deshalb drahtlose Technologien ungeeignet sind, müssen neben Stromkabeln weitere Kabel, und zwar Datenkabel verlegt werden.

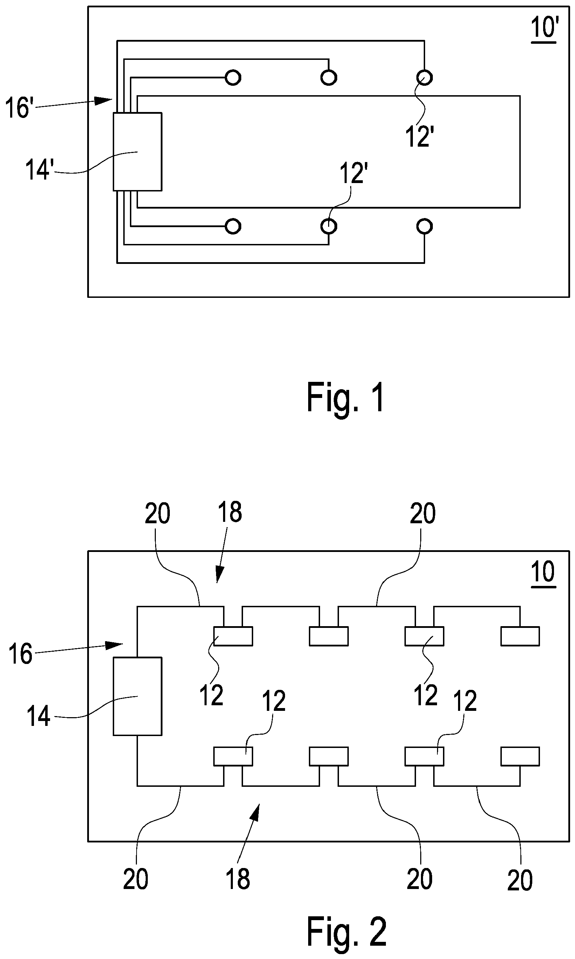

Zusätzlich wird bisher für die Netzwerkkabel auf eine Sterntopologie gesetzt. Zusätzlich wird bisher für die Verkabelung von Messgeräten und Sensoren in einem Stall zwecks Datenkommunikation auf eine Sterntopologie gesetzt. Von einem zentralen Einspeisepunkt 14' ausgehend, sei es der Stromverteilerkasten im Stall 10' oder ein Datenrouter, werden jeweils Kabel 18' zu den einzelnen Geräten 12' verlegt. Dies ist in Fig. 1 visualisiert.

### Nachteile und Einschränkungen

Für die Installation bedeutet dies nicht nur zusätzliche Kosten für das Material, sondern vor allem auch einen erhöhten Aufwand für die Verlegung der Kabel. Ist das Gebäude nicht einfach zugänglich, weil die baulichen oder betrieblichen Abläufe dies erschweren oder unmöglich machen, stellt dieser Verlegungsaufwand ein erhebliches Problem dar. Dies ist vor allem für Tierställe entscheidend, da hier nur schwerlich neue Kabel verlegt werden können. Auf der anderen Seite können - bei großen Ställen mit vielen Tieren - die Kosten für die Verkabelung schnell die theoretischen Kosten für die Messgeräte übersteigen. In diesem Fall wird eine eigentlich nützliche und gewollte Technologie bzw. ein Produkt praktisch und faktisch wirtschaftlich unrentabel.

Zusätzlich dürfen "Laien" elektrische Anlagen, die an das öffentliche Elektrizitätsversorgungsnetz angeschlossen sind, weder errichten, noch ändern oder noch reparieren (Paragraph 13 Niederspannungsanschlussverordnung). Diese Arbeiten müssen durch ein in ein Installateurverzeichnis eines Netzbetreibers eingetragenes Installationsunternehmen durchgeführt werden.

Ferner muss zwar jedes Messgerät mit dem Einspeisepunkt verbunden sein, damit es Strom beziehen kann oder kabelgebunden Daten austauschen kann. Jedoch ist dieses Vorgehen nicht effizient, was die Menge an zu verlegenden Kabeln (in Metern) anbelangt.

### Erfindung

Aufgabe der Erfindung ist es, die Kommunikationsanbindung und Energieversorgung von Sensoren in Ställen zu vereinfachen.

Zur Lösung dieser Aufgabe wird mit der Erfindung eine Vorrichtung zur Ortung der Tiere einer Viehherde im Bereich eines Stalls vorgeschlagen, die versehen ist mit
- einer Busleitung,
- mehreren Empfangsantennen aufweisenden Busteilnehmern zur Anordnung in oder an einem Stall,
- wobei die mehreren Empfangsantennen dazu ausgelegt sind, Funksignale von Sendern zu empfangen, die von sich im Bereich des Stalls befindenden Tieren mitführbar sind,
- einer an die Busleitung angeschlossenen Steuer- und Versorgungseinheit zur uni- oder bidirektionalen Datenkommunikation mit den Busteilnehmern und zur Versorgung der Busteilnehmer mit elektrischer Energie, und
- wobei die Busteilnehmer an die Busleitung angeschlossen sind und über die Busleitung mit der Steuer- und Versorgungseinheit sowohl für die Datenkommunikation als auch zur Energieversorgung verbunden sind.

Mit der Erfindung wird für die Applikation in einem Stall ein Bussystem vorgeschlagen, das sowohl der Energieversorgung als auch der Datenkommunikation dient. An die Busleitung sind eine Vielzahl von Busteilnehmern angeschlossen, von denen jeder mindestens eine Empfangsantenne aufweist. Die Empfangsantennen empfangen Signale von Sensoren, die von sich im Bereich des Stalls aufhaltenden Tieren getragen werden. Die Sender senden entweder zeitgemultiplext oder bei verschiedenen Frequenzen Signale aus, die von den Empfangsantennen empfangen werden. Durch an sich bekannte Verfahren lässt sich dann die Position des Senders und damit die Position des Tieres im Stall detektieren. Wenn mit dem System lediglich die Anwesenheit eines Tieres im Bereich eines Stalls erfasst werden soll, so bedarf es erfindungsgemäß nicht zwingend der Ortung des Tieres, sondern lediglich der Anwesenheitsdetektion.

Die Verwendung eines Bussystems mit einer Busleitung für sowohl die Datenkommunikation als auch die elektrische Energieversorgung von Busteilnehmern mit Empfangsantennen zur Anordnung in einem Stall für die Ortung, d. h. für die Positionsbestimmung oder für die Anwesenheitsbestimmung eines Tieres der Herde ist in der Viehwirtschaft grundsätzlich nicht bekannt. Hier sorgt die Erfindung für Abhilfe.

Besonders vorteilhaft ist es, wenn die Busleitung wie eine "Daisy Chain" ausgeführt ist. Das hat den Vorteil, dass ausgehend von einem elektrisch an die Busleitung angeschlossenen Busteilnehmer der nächste Busteilnehmer durch eine zwischen beide zu installierende elektrische Verbindung angeschlossen wird. Damit muss nun nicht mehr pro Busteilnehmer eine separate Leitung bis zur Steuer- und Versorgungseinheit verlegt werden. Vielmehr baut sich die "Daisy Chain"-Busleitung von Busteilnehmer zu Busteilnehmer auf. Der zur Steuer- und Versorgungseinheit nächstliegende Busteilnehmer ist über einen Busleitungsabschnitt mit dieser Einheit verbunden.

In weiterer zweckmäßiger Ausgestaltung der Erfindung kann vorgesehen sein, dass die Busleitung mehrere Busleitungszweige aufweist, die sich ausgehend von der Steuer- und Versorgungseinheit erstrecken. Jeder Busleitungszweig ist dann, wie zuvor beschrieben, als "Daisy Chaining" aufgebaut und besteht aus einzelnen separaten Busleitungsabschnitten zwischen, bezogen auf den ersten Busteilnehmer, der Steuer- und Versorgungseinheit und dem besagten ersten Busteilnehmer und von da ab zwischen jeweils benachbarten Busteilnehmern.

Die Erfindung wird nachfolgend anhand eines Ausführungsbeispiels und unter Bezugnahme auf die Zeichnung näher erläutert. Im Einzelnen zeigen dabei:
- Fig. 1: eine schematische Darstellung der bisherigen Verkabelung mehrerer Geräte in einem Stall mit einem Einspeisungspunkt für die Kommunikation oder für die Energieversorgung und
- Fig. 2: eine schematische Darstellung der erfindungsgemäßen Verkabelung für die Datenkommunikation und Stromversorgung mehrerer Geräte in einem Stall.

Die Erfindung stellt ein System zur Verfügung, um Sensoren auf der einen Seite mit Strom zu versorgen und auf der anderen Seite die Daten- sowie Kommunikationsanbindung sicherzustellen. Bisher werden, um Sensoren oder Messgeräte in Gebäuden wie z.B. Ställen zu installieren, aufwendig verschiedene Kabelsysteme verlegt, nämlich ein erstes für die Stromversorgung und ein weiteres für den Datenaustausch. Die Erfindung beschreibt ein Verfahren, um für beides ein Kabelsystem zu nutzen, so dass die Materialkosten und der Installationsaufwand deutlich reduziert werden. So wird erfindungsgemäß über Netzwerkkabel zusätzlich Strom übertragen oder - bei bereits vorhandener Stromverkabelung im Gebäude - über Stromkabel Daten, um unnötige Kabelinstallationen zu vermeiden. Dies ist vor allem für Tierställe entscheidend, da hier nur schwerlich neue Kabel verlegt werden können.

An dieser Stelle setzt die Erfindung an, indem eine Vorrichtung vorgeschlagen wird, bei der Geräte in einem Stall effizienter und effektiver kabelgebundenen Strom beziehen und Daten austauschen können.

Eine erste Ausprägung der Erfindung betrifft den Fall, dass im Stall keinerlei Stromkabel vorverlegt sind oder genutzt werden können. In diesem Fall müssten sowohl Daten- als auch Stromkabel aufwendig verlegt werden. Die Erfindung nutzt hierfür die sogenannte Stromversorgung über Ethernet (Power over Ethernet - PoE). Dies bezeichnet ein Verfahren nach dem Standard IEEE 802.3at, mit dem netzwerkfähige Geräte über ein normales Netzwerkkabel mit Strom versorgt werden können.

Dadurch müssen nicht nur keine zwei Kabel verlegt werden, sondern ferner entfällt damit auch die Elektroinstallation mit dem Verlegen der Stromkabel. Hierfür wird ein Netzwerkrouter oder -switch im Gebäude installiert, welcher PoE unterstützt und an seinen Ports nicht nur Daten, sondern auch Strom liefert. An diese Ports werden dann handelsübliche Netzwerkkabel nach der Norm TIA-568A/B, welche auch als Patchkabel bezeichnet werden, mit RJ-45 Steckern angeschlossen. Dann lässt sich über dieses Patchkabel sowohl das Gerät mit Strom versorgen (bis zu 25,5 W) als auch Daten nach IEEE-802.3-Ethernet-Standard austauschen.

Eine zweite Variante der Erfindung stellt eine Erweiterung des zuvor Gesagten dar. Um die Probleme der sternförmigen Netzwerktopologie zu beseitigen, setzt die Erfindung weiter ein sogenanntes "Daisy Chaining" ein. Damit ist ein Verfahren gemeint, dass eine Anzahl von Hardware-Komponenten in Serie miteinander verbindet. Das erste Gerät ist weiterhin direkt mit dem Einspeisepunkt verbunden (vgl. Fig. 1). Die weiteren Komponenten sind nun jeweils mit ihren Vorgängern verbunden (Reihenschaltungsprinzip), womit eine Kette entsteht. Der Vorteil ist, dass signifikant Kabel eingespart werden können, da mit jedem weiteren Gerät im Gebäude nicht der gesamte Weg zurück zum Einspeisepunkt verkabelt werden muss. Dies lässt sich technisch einwandfrei mit der Daten- und Stromübertragung mit Patchkabel kombinieren.

Die dritte Ausprägung der Erfindung ist für den Fall vorgesehen, dass im Gebäude bereits eine Stromversorgung vorhanden ist, deren Verkabelung genutzt werden kann, um die Geräte für die Datenkommunikation anzubinden. Hierzu werden die bereits verlegten Stromkabel genutzt, um nicht nur die Stromversorgung zu gewährleisten, sondern auch Daten zu übertragen. Dazu lassen sich Trägerfrequenzanlagen (TFA) nutzen, um Daten über ein vorhandenes Stromnetz zu übertragen. Dies wird auch als PowerLine oder PowerLAN bezeichnet, wobei vorhandene elektrische Stromleitungen im Niederspannungsnetz zum Aufbau eines lokalen Netzwerks zur Datenübertragung genutzt werden. Entsprechende Adapter für das Stromnetz sind nach dem Homeplug- bzw. IEEE-1901-Standard genormt. Damit lassen sich Daten über das Netzwerkkabel übertragen, so dass keine Kommunikationsinfrastruktur erforderlich ist und somit gänzlich auf Kabel und deren Installation verzichtet werden kann.

In Fig. 2 ist ein Beispiel für die mit der erfindungsgemäßen Vorrichtung erzielbaren Verkabelungstopologie gezeigt. In einem Stall 10 sind vorzugsweise an den Wänden mehrere Geräte angebracht, bei denen es sich um Busteilnehmer 12 mit Empfangsantennen für die Ortung von Tieren einer Herde per Funk handelt. Jedes Tier trägt einen Funksender zum Aussenden von Funksignalen für die Ortung, die auf einem von mehreren verschiedenen, an sich bekannten Verfahren basiert (z. B. TDoA-Verfahren - Time-Difference-of-Arrival). Die Busteilnehmer 12 sind nach Art einer Daisy-Chain-Topologie mit einer Steuer- und Versorgungseinheit 14 verbunden, und zwar sowohl zur Datenkommunikation als auch für die Energieversorgung. Hierzu ist eine Busleitung 16 vorgesehen, die ein oder mehrere Zweige 18 aufweisen kann, welche jeweils von der Steuer- und Versorgungseinheit 14 ausgehend verlaufen. Im Beispiel der Fig. 2 existieren zwei derartige Busleitungszweige 18. Jeder Busleitungszweig 18 der Busleitung 16 weist einzelne Busleitungsabschnitte 20 auf, die jeweils benachbarte Komponenten, die an dem betreffenden Busleitungszweig 18 angeschlossen sind, untereinander verbinden. Die Besonderheit hier besteht darin, dass sich das Bussystem problemlos erweitern lässt, indem weitere Busteilnehmer 12 über einen Busleitungsabschnitt 20 an den jeweils letzten Busteilnehmer 12 des Busleitungszweiges 18 anschließbar sind. Es sind also keine separaten Kabelverbindungen von jedem einzelnen Busteilnehmer 12 zur Steuer- und Versorgungseinheit 14 zu verlegen. Die Busteilnehmer 12 jedes Busleitungszweiges 18 sind vielmehr nach Art einer Reihenschaltung miteinander gekoppelt. Dies kann beispielsweise dadurch erfolgen, dass pro Busteilnehmer 12 in der Busleitung ein Splitter angeordnet ist, an dem der Busteilnehmer 12 angeschlossen ist. Von Splitter zu Splitter erstrecken sich dann die einzelnen Busleitungsabschnitte. Alternativ kann ein Busteilnehmer 12 auch zwei Busanschlüsse aufweisen, mit denen dann die beiden von einem Busteilnehmer 12 ausgehenden und zu den benachbarten Busteilnehmern führenden Busleitungsabschnitte angeschlossen sind.

Die Erfindung wurde vorstehend anhand von vernetzten Geräten in Form von Empfangsantennen zur Ortung bzw. Anwesenheitsdetektion von Tieren einer Herde in einem Überwachungsbereich wie beispielsweise einem Stall beschrieben. Mit dem erfindungsgemäßen Konzept lassen sich selbstverständlich aber auch andere Geräte zwecks Vereinfachung der Datenkommunikation und Energieversorgung vernetzen. Bei derartigen anderen Geräten kann es sich beispielsweise um Wetterstationen handeln, die Umgebungstemperatur und Umgebungsfeuchtigkeit aufzeichnen. Die Erfassung derartiger Daten für das Herdenmanagement ist durchaus interessant, da das Verhalten der Herde von derartigen Parametern abhängig sein kann bzw. ist. Als weiteres Beispiel für erfindungsgemäß zu vernetzende Geräte sei ferner auf Kameras verwiesen, mit denen sich das Verhalten der Tiere einer Herde überwachen lässt. Insoweit ist die Erfindung also gerichtet auf für die Energieversorgung und die Datenkommunikation auf eine Art und Weise zu vernetzende Geräte zur Erfassung bzw. Bereitstellung von Daten für das Herdenmanagement.

### BEZUGSZEICHENLISTE

- 10: Stall
- 12: Busteilnehmer
- 14: Versorgungseinheit
- 16: Busleitung
- 18: Busleitungszweig
- 20: Busleitungsabschnitt

## Patentansprüche

1. Vorrichtung zur Ortung der Tiere einer Viehherde im Bereich eines Stalls, mit
- einer Busleitung (16),
- mehreren Empfangsantennen aufweisenden Busteilnehmern (12) zur Anordnung in oder an einem Stall (10),
- wobei die mehreren Empfangsantennen dazu ausgelegt sind, Funksignale von Sendern zu empfangen, die von sich im Bereich des Stalls (10) befindenden Tieren mitführbar sind,
- einer an die Busleitung (16) angeschlossenen Steuer- und Versorgungseinheit (14) zur uni- oder bidirektionalen Datenkommunikation mit den Busteilnehmern (12) und zur Versorgung der Busteilnehmer (12) mit elektrischer Energie, und
- wobei die Busteilnehmer (12) an die Busleitung (16) angeschlossen sind und über die Busleitung (16) mit der Steuer- und Versorgungseinheit (14) sowohl für die Datenkommunikation als auch zur Energieversorgung verbunden sind.

2. Vorrichtung nach Anspruch 1, **dadurch gekennzeichnet, dass** die Busleitung (16) mehrere Busleitungsabschnitte (20) aufweist, von denen ein erster Busleitungsabschnitt (20) sich zwischen der Steuer- und Versorgungseinheit (14) und einem ersten Busteilnehmer (12) erstreckt, wobei ausgehend von dem ersten Busteilnehmer (12) ein zweiter Busleitungsabschnitt (20) bis zu einem zweiten Busteilnehmer (12) verläuft, und dass auf diese Weise jeder Busteilnehmer (12) über jeweils einen Busleitungsabschnitt (20) mit benachbarten Busteilnehmern (12) verbunden ist.

3. Vorrichtung nach Anspruch 1, **dadurch gekennzeichnet, dass** die Busleitung (16) mindestens zwei Busleitungszweige (18) aufweist, von denen jeder ausgehend von der Steuer- und Versorgungseinheit (14) verläuft, dass jeder Busleitungszweig (18) mehrere Busleitungsabschnitte (20) aufweist, von denen ein erster Busleitungsabschnitt (20) sich zwischen der Steuer- und Versorgungseinheit (14) und einem ersten Busteilnehmer (12) erstreckt, wobei ausgehend von diesem ersten Busteilnehmer (12) ein zweiter Busleitungsabschnitt (20) bis zu einem zweiten Busteilnehmer (12) verläuft, und dass auf diese Weise jeder Busteilnehmer (12) des betreffenden Busleitungszweiges (18) über jeweils einen Busleitungsabschnitt (20) mit benachbarten Busteilnehmern (12) verbunden ist.
